# EUROPEAN PATENT SPECIFICATION

(11) **EP 1 320 237 B1**
(45) Date of publication and mention of the grant of the patent: **19.04.2006**
(21) Application number: 02010956.7
(22) Date of filing: 16.05.2002
(51) Int. Cl.: H04L 29/06, H04L 12/56, H04L 29/08, G06F 17/30

(54) **System and method for controlling congestion in networks**
System und Verfahren zur Überlastregelung in Netzwerken
Système et procédé pour le contrôle de congestion dans des réseaux

(30) Priority: 13.12.2001 JP 2001379772
(43) Date of publication of application: 18.06.2003
(73) Proprietor: Hitachi, Ltd., Chiyoda-ku, Tokyo 101-8010 (JP)
(72) Inventor: Irifune, Kazuyuki, Hitachi, Ltd., Intell.Prop. Grp, Chiyoda-ku, Tokyo 100-8220 (JP); Tsunami, Katsuyuki, Hitachi,Ltd., Intell.Prop. Grp, Chiyoda-ku, Tokyo 100-8220 (JP); Nishikado, Takashi, Hitachi,Ltd., Intell.Prop. Grp, Chiyoda-ku, Tokyo 100-8220 (JP); Aoki, Hideo, Hitachi,Ltd., Intell.Prop. Grp, Chiyoda-ku, Tokyo 100-8220 (JP)
(74) Representative: Strehl Schübel-Hopf & Partner

(56) References cited:
- WO-A-01/57729
- US-A- 5 799 002
- RUMSEWICZ M ET AL: "Preferential load balancing for distributed internet servers" IEEE ARTICLE, 15 May 2001 (2001-05-15), pages 363-370, XP010542677

## Description

### BACKGROUND OF THE INVENTION

The present invention relates to a congestion controlling device and method in data communications among client terminals and servers. The present invention employs, as its targets, the data communications performed in, for example, a communications carrier, an ISP (Internet Service Provider), and an intra-firm network (e.g., Local Area Network: LAN, Wide Area Network: WAN).

Nowadays, the client terminals that are connectable to the Internet are being rapidly prevailing. This condition has made it possible from the client terminals to execute, via the Internet, browsing of news, weather forecast, or local-region information, ticket reservation, bank transaction, securities exchange, and the like. Also, in addition to the accesses from PCs (personal computers), the cases where the accesses are made from mobile phones so as to enjoy the above-described services have increased in number.

In this way, the execution of the various types of services has been made possible via the communications lines. This condition makes it likely that the service requests will be concentrated on a particular server. The scheme that the client terminals directly make the service requests to the server has caused the following situation to occur: With respect to the large number of the requests from the client terminals, the communications-lines capacities and the processing capabilities of the server cannot deal with the requests, and accordingly the responses become more or less unlikely to be returned back to the users.

For example, in a network system that includes, as its targets, several millions or more users, in some cases, the requests are concentrated on a particular URL (Uniform Resource Locator). On that occasion, there exist many cases where the communications paths come to be congested (which means that the communications paths are jammed and the communications become impossible), or where the loads are concentrated on the data relaying devices and the contents severs. As a result, the users are kept waiting for a long time until the users can enjoy the services, or cannot utilize necessary services at all.

Also, the excessive loads are concentrated on the data relaying devices and the contents severs. This condition may cause some troubles to occur therein and stop the operations, thereby resulting in a possibility of stopping even the function as the entire network. Moreover, if the service degradations to the users occur frequently due to the concentration of the requests, there exits a possibility that a user who now utilizes the network system may transfer to the network system of another firm. In addition, influences to the communications carrier or the ISP business that provides the network system can also be anticipated. The control over the congestion like this has been disclosed in, for example, U.S. Patent No. 5, 335, 224.

M. Rumsewicz et al.: "Preferential load balancing for distributed internet servers' IEEE ARTICLE, 15 May 2001, pp. 363-370 disclose a system comprising a plurality of clients, a plurality of server clusters and a dispatcher which receives session requests from the clients, forwards them to the clusters and receives load information from the clusters. The received load information is used by the dispatcher to form and periodically update congestion levels of the clusters. If all clusters are considered congested, the dispatcher performs admission control on session requests it receives, and responds to received session requests with a congestion notification to the clients. Otherwise the dispatcher forwards session requests to an uncongested cluster from a list of preferred clusters associated with the respective client. Thus, the dispatcher relies on receiving load information from the server clusters.

Also, as the case where a service request cannot be accepted, there exists the following case: A request for particular contents from a user, e.g., a request for the contents including violence or a content contrary to the public peace and good order, is regulated so that the particular contents will not be provided to the user. In such a case, the user cannot know the reason why the user cannot receive the requested contents.

### SUMMARY OF THE INVENTION

It is an object of the invention to provide a congestion controlling device and method which improves the service to the users of the client terminals.

This object is solved by a congestion controlling device according to claim 1 and a congestion controlling method according to claim 16. The dependent claims relate to preferred embodiments of the invention. Claim 20 relates to a system including the congestion controlling device.

An embodiment the present invention provides a congestion controlling system allowing the user to know the situation of a service even if the response to the service request made from the user is slow.

According to one embodiment of the present invention, there is provided a congestion controlling system including a plurality of client terminals capable of making requests for acquisitions of information and displaying the information acquired in response to the requests, a plurality of contents servers for making responses to the requests so as to transmit, to the plurality of client terminals, the information corresponding to the requests, and a congestion controlling device set up between the plurality of client terminals and the plurality of contents servers, wherein the congestion controlling device includes the following configuration components: A data relaying device made related with the plurality of client terminals and the plurality of contents servers for performing the relay therebetween, a plurality of Web proxy servers including a unit for caching particular information when a request for acquiring the particular information occurs a plurality of times and a unit for transmitting the particular information to the plurality of client terminals, a load distributing device made related with the data relaying device and the Web proxy servers for performing a distributing control over the requests from the data relaying device so that the requests will not be concentrated on a particular Web proxy server, and a request regulating unit made related with the load distributing device for regulating the requests from the client terminals.

In the case where a large number of requests have been made from the client terminals, the use of the above-described congestion controlling system makes it possible to suppress the congestion in the communications system.

The utilization of the present invention allows a communications system provider to provide the users with the higher-reliability communications services in comparison with the conventional ones. The users can enjoy the communications services that, in answer to the requests, permit the users to obtain higher-speed responses than the conventional ones. Also, in the case where the requests are excessive in number, the communications system informs the users that the system cannot accept the requests from the users. This makes it unnecessary for the users to waiting for the responses for a long time, thereby permitting the users to request some other services. The communications system provider can have chances for providing the new services.

Other objects, features and advantages of the invention will become apparent from the following description of the embodiments of the invention taken in conjunction with the accompanying drawings.

### BRIEF DESCRIPTION OF THE DRAWINGS

FIG. 1 is a diagram for illustrating the configuration of a congestion controlling system according to one embodiment of the present invention;
FIG. 2A is a diagram for illustrating the configuration of a load distributing device and FIG. 2B is a diagram for illustrating the configuration of a Web proxy server inside the congestion controlling system according to the embodiment of the present invention;
FIG. 3 is a diagram for illustrating the configuration of a request regulating device inside the congestion controlling system according to the embodiment of the present invention;
FIG. 4 is a flowchart diagram for showing a congestion control method where the number of unprocessed-requests is defined and employed as the judgement criterion in the congestion controlling system according to the embodiment of the present invention;
FIG. 5 is a sequence diagram for showing the congestion control method where the number of the unprocessed-requests is defined and employed as the judgement criterion in the congestion controlling system according to the embodiment of the present invention;
FIG. 6 is a diagram concerning a method of judging whether or not the number of the unprocessed-requests exceeds a threshold value in the congestion controlling system according to the embodiment of the present invention;
FIG. 7 is a diagram concerning another method of judging whetheror not the number of the unprocessed-requests exceeds threshold values in the congestion controlling system according to the embodiment of the present invention;
FIG. 8A is a diagram for illustrating an example of a regulating message content, and FIG. 8B is a diagram for illustrating a description example of regulating contents;
FIG. 9 is a flowchart diagram for showing a congestion control method where a requested URL is defined and employed as the judgement criterion in a congestion controlling system according to a 1st modified example of the embodiment of the present invention;
FIG. 10 is a diagram for illustrating an example of regulated request contents and the target URLs according to the 1st modified example of the embodiment of the present invention;
FIG. 11A is a diagram for illustrating an example of the regulating message content, and FIG. 11B is a diagram for illustrating a description example of the regulating contents according to the 1st modified example of the embodiment of the present invention;
FIG. 12 is a flowchart diagram for showing a congestion control method where the performance of the Web proxy server is defined and employed as the judgement criterion in a congestion controlling system according to a 2nd modified example of the embodiment of the present invention;
FIG. 13 is a flowchart diagram for showing a congestion control method where the response time of the contents server is defined and employed as the judgement criterion in a congestion controlling system according to a 3rd modified example of the embodiment of the present invention;
FIG. 14 is a flowchart diagram for showing a congestion control method where the line utilization ratio is defined and employed as the judgement criterion in a congestion controlling system according to a 4th modified example of the embodiment of the present invention;
FIG. 15A is a diagram for illustrating an example of the regulating message content, and FIG. 15B is a diagram for illustrating a description example of the regulating contents; and
FIG. 16 is a diagram for illustrating the contents of a statistical information processing set up in a system managing device or outside the system managing device.

### DESCRIPTION OF THE EMBODIMENTS

In the present specification, the client terminals are, for example, terminals that are capable of requesting, via the Internet, information such as characters, images, sounds, or the like and displaying the requested information with the characters, the images, the sounds, or the like. The contents servers are, for example, servers for receiving the requests so as to transmit, to the client terminals, the information corresponding to the requests. The Web proxy servers are, for example, servers including a unit for transmitting information to the client terminals without transmitting the requests from the congestion controlling system to the contents servers.

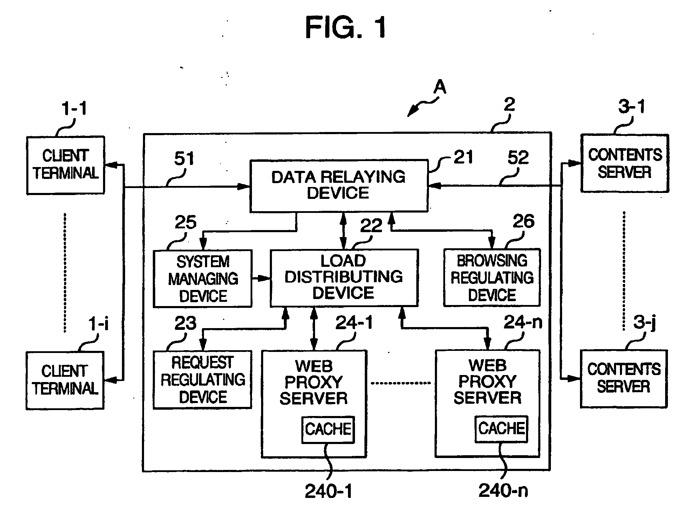

Hereinafter, referring to the FIGS. 1 to 6, the explanation will be given below concerning the congestion controlling system according to one embodiment of the present invention.

As illustrated in FIG. 1, the congestion controlling system A according to the embodiment of the present invention includes a large number of client terminals 1-1 to 1-i, a plurality of contents servers 3-1 to 3-j, and a congestion controlling device 2.

The client terminals 1-1 to 1-i are, for example, terminals that are capable of requesting, via the Internet, information such as characters, images, sounds, or the like and displaying (i.e., browsing) the requested information with the characters, the images, the sounds, or the like when acquiring these pieces of information. The client terminals 1-1 to 1-i are, for example, personal computers (PCs), personal digital assistants (PDAs), or mobile phones.

The plurality of contents servers 3-1 to 3-j, which are service offering parties, receive the requests from the client terminals 1-1 to 1-i, then transmitting the contents thereto. The congestion controlling device 2 is made related with each of the client terminals 1-1 to 1-i and each of the contents servers 3-1 to 3-j.

A provider (i.e., communications carrier) mediates between the client terminals 1-1 to 1-i and the plurality of contents servers 3-1 to 3-j. For example, the congestion controlling device (system) 2 has been set up as a piece of equipment included in the provider.

When the congestion occurs in the communications units and the network, the congestion controlling device 2 controls the congestion. The congestion controlling device 2 includes, for example, a data relaying device 21, a load distributing device 22, a request regulating device (server) 23, Web proxy servers 24-1 to 24-n, a system managing device 25, and a browsing regulating device 26. The congestion controlling device 2, in particular, distributes each of the requests from the client terminals 1-1 to 1-i into any one of the Web proxy servers 24-1 to 24-n, thereby making it possible to control a congestion that is caused by an increase in the utilization ratio of a communications line (52) between the data relaying device 21, and the contents servers 3-1 to 3-j.

The data relaying device 21, which is referred to as, e.g., "a router", is a relaying device for transmitting/receiving the data between the client terminals 1-1 to 1-i and the contents servers 3-1 to 3-j. Namely, the device 21 transfers a transmission/reception data packet to a device of an address described in the header of the data packet.

As described above, the load distributing device 22 is, for example, a device for distributing a processing for each of the requests from the plurality of client terminals 1-1 to 1-i into any one of the plurality of Web proxy servers 24-1 to 24-n so as to distribute the load imposed onto the relaying device 21. Having received the header of a transmission/reception packet and a Web-contents acquiring request via the load distributing device 22, each of the Web proxy servers relays the request over to any one of the contents servers 3-1 to 3-j. Moreover, each of the Web proxy servers relays the contents transferred from any one of the contents servers 3-1 to 3-j, thereby transmitting the contents to the client terminal of the request source via the load distributing device 22 and any one of the Web proxy servers.

The request regulating device 23 is, for example, a device that, if a large quantity of Web-contents acquiring requests have been concentrated from the client terminals for a short time-period, regulates the request quantity from the client terminals 1-1 to 1-i so that the request quantity will not exceed a processing limit of the Web proxy servers 24-1 to 24-n and the contents servers 3-1 to 3-j.

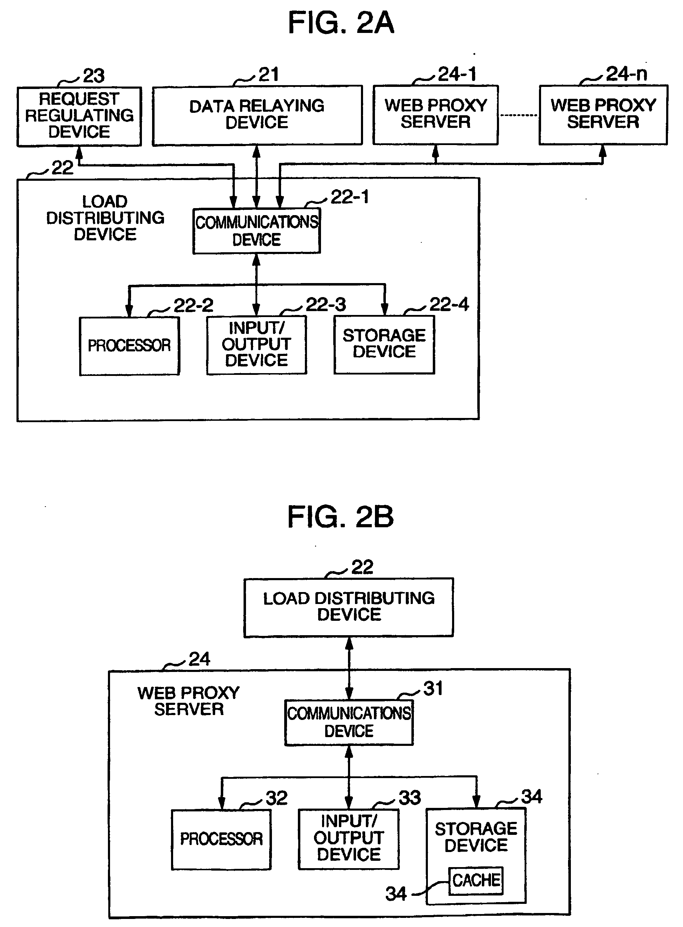

FIG. 2A is a function block diagram for illustrating the configuration of the load distributing device 22. As illustrated in FIG. 2A, the load distributing device 22 includes, for example, a communications device 22-1, a processor 22-2, an input/output device 22-3, and a storage device 22-4. The communications device 22-1 performs the transmission/reception of the data packets with the data relaying device 21 and the Web proxy server 24. The processor 22-2 performs the control of the entire device. The input/output device 22-3 includes, for example, a keyboard and a printer, thereby performing the data input/output for performing a control, an instruction, or the like. The storage device 22-4 stores various type of information.

FIG. 2B is a function block diagram for illustrating the configuration of an arbitrary Web proxy server of the Web proxy servers 24-1 to 24-n. Hereinafter, it is assumed that a reference numeral without a suffix denotes one of a plurality of identical or equivalent configuration components. As illustrated in FIG. 2B, the Web proxy server 24 includes, for example, a communications device 31, a processor 32, an input/output device 33, and a storage device 34. The communications device 31 performs the transmission/reception of the data packets with the load distributing device 22. The processor 32 performs the control of the entire device. The input/output device 33 includes, for example, a keyboard and a printer, thereby performing the data input/output for performing a control, an instruction, or the like. The storage device 34, which stores various type of information, includes a cache memory 240 for caching the contents information in the contents servers.

Incidentally, the load distributing device 22 has information indicating what contents which of the Web proxy servers 24-1 to 24-n has cached. The information stored temporarily into the cache is transmitted to the client terminal 1 from the Web proxy server 24 via the load distributing device 22.

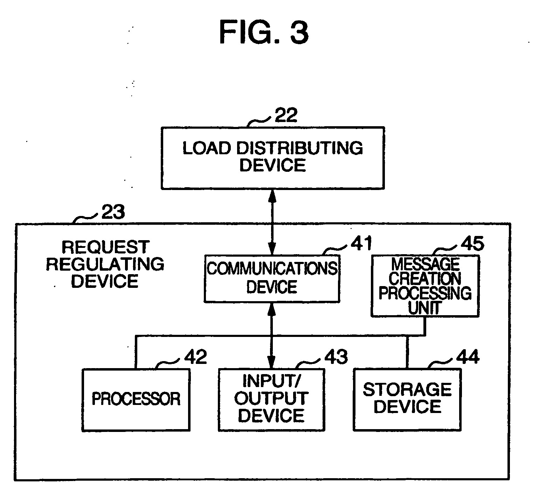

FIG. 3 is a function block diagram for illustrating the configuration of the request regulating device 23. The request regulating device 23 includes, for example, a communications device 41, a processor 42, an input/output device 43, a storage device 44, and a message creation processing unit 45. The communications device 41 performs the transmission/reception of the data packets with the load distributing device 22. The processor 42 performs the control of the entire device. The input/output device 43 includes, for example, a keyboard and a printer, thereby performing the data input/output for performing a control, an instruction, or the like. The storage device 44 stores various type of information. The message creation processing unit 45 will be explained later.

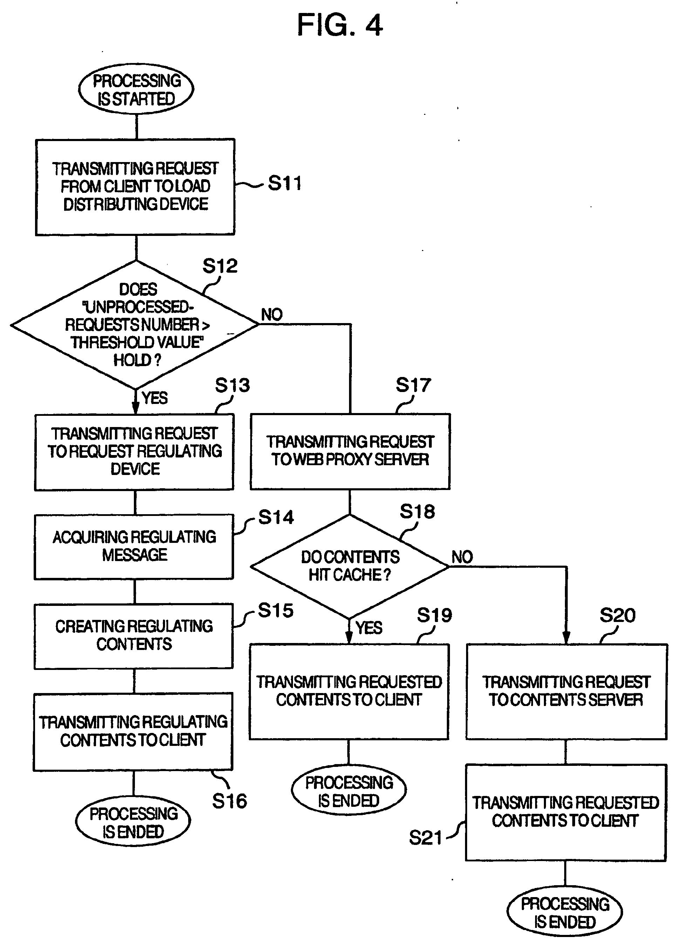

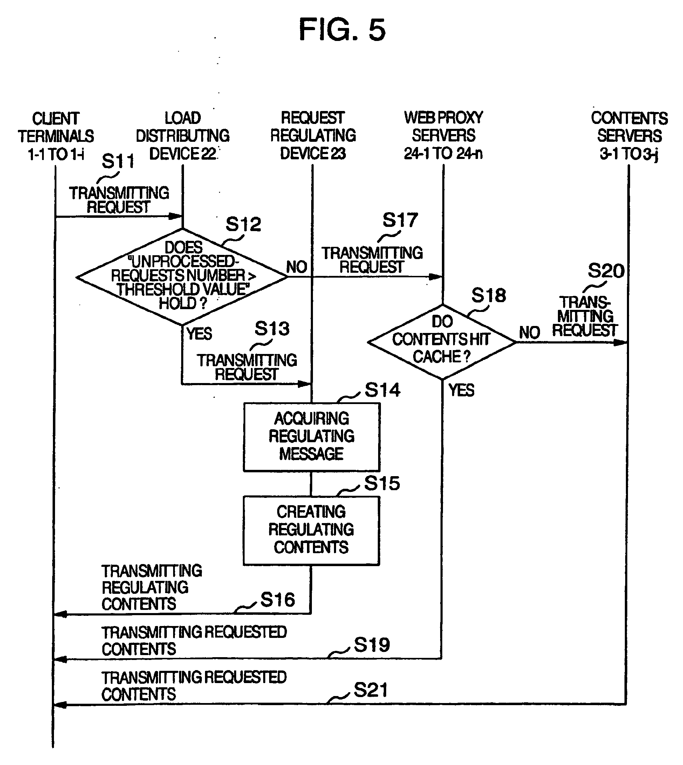

FIG. 4 is a flowchart diagram for showing a congestion control method where the number of unprocessed-requests is defined and employed as the judgement criterion. FIG. 5 is a sequence diagram for showing the congestion control method, where the processing flow in FIG. 4 is expressed as the data flow among the devices constituting the congestion controlling device 2. Although the explanation will be given below assuming that any one of all the client terminals 1-1 to 1-i has made the request, the processing flow also becomes basically the same in the case of assuming that any one of some terminals of the client terminals 1-1 to 1-i has made the request.

As illustrated in FIG. 4 and FIG. 5, if a client terminal 1 has transmitted a Web-contents acquiring request to a contents server 3, at a step S11, the request is sent to the load distributing device 22. At a step S12, the load distributing device 22 judges whether or not the above-described unprocessed-requests number has exceeded a threshold value set in advance. Here, the unprocessed-requests refer to requests the corresponding contents to which have been not returned back to the client terminals 1-1 to 1-i although the requests had been already made from the client terminals 1-1 to 1-i.

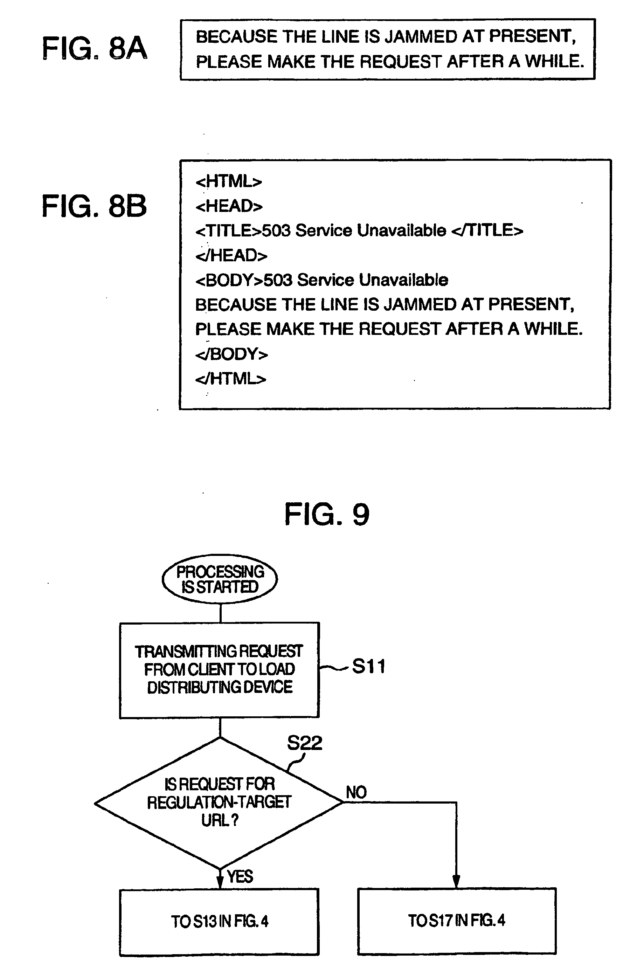

In the judgement processing at the step S12, if the unprocessed-requests number has exceeded the threshold value set in advance ("Yes"), at a step S13, the load distributing device 22 transmits the request from the client terminal 1 to the request regulating device 23. At a step S14, the request regulating device 23 acquires, from the message creation processing unit 45 therein, a regulating message content illustrated in FIG. 8A and saying, for example, "Because the line is jammed at present, please make the request after a while." At a step S15, the request regulating device 23 creates regulating contents as illustrated in FIG. 8B, using the regulating message content. At a step S16, the request regulating device 23 transmits the regulating contents to the client terminal 1 via the load distributing device 22. Transmitting the regulating contents makes it possible to make the client suppress the request.

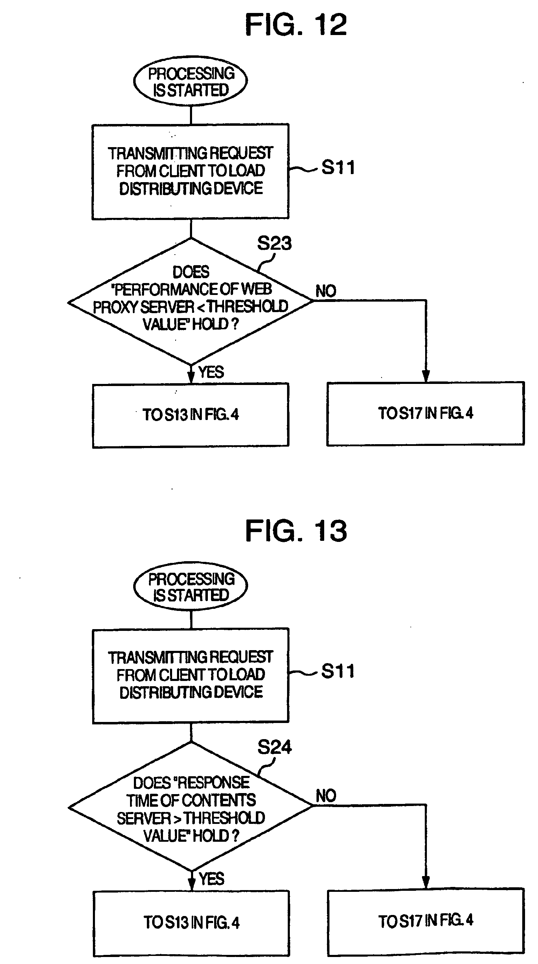

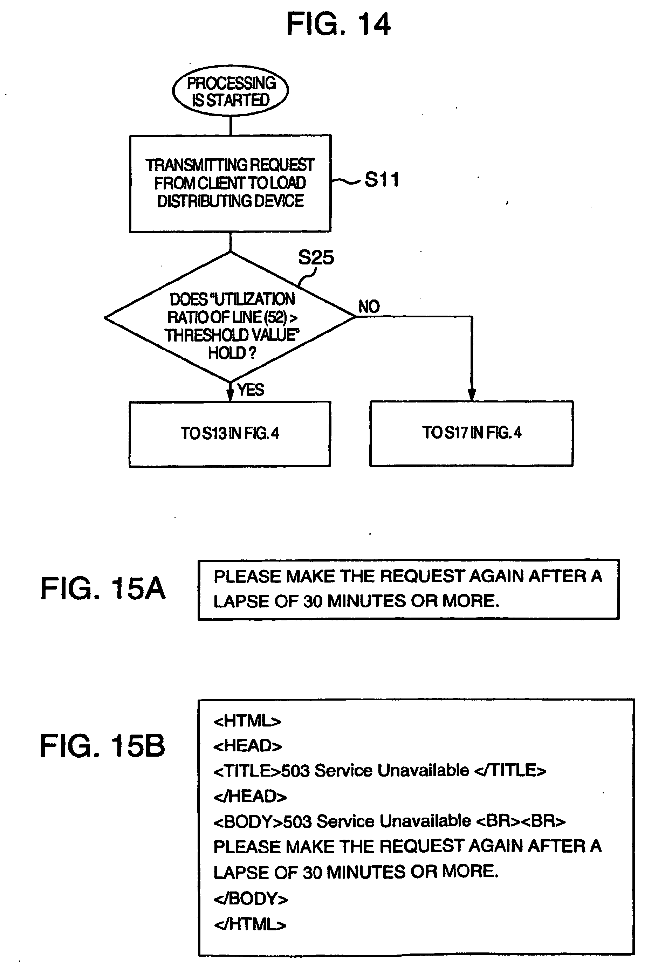

Meanwhile, if the judgement at the step S12 is "No", at a step S17, the load distributing device 22 transmits the request to a Web proxy server 24 of the distribution destination. At a step S18, the Web proxy server 24 to which the request has been distributed confirms whether or not the contents corresponding to the request hit the cache 240 of its own. If the contents have hit the cache, at a step S19, the requested contents are transmitted to the client terminal 1 that had requested the contents. This suppresses the congestion on the communications line (52) between the data relaying device 21 and the contents servers 3-1 to 3-j. Incidentally, the load distributing device 22 is supposed to make the judgement in the judgement processing at the step S12 in FIG. 4 and FIG. 5. The following modification, however, may be performed here: The load distributing device 22 leaves the judgement to the request regulating device 23 and, based on a judgement result from the request regulating device 23, the load distributing device 22 suppresses the request transmission. This modification is also applicable to a step S22 in FIG. 9, a step S23 in FIG. 12, a step S24 in FIG. 13, and a step S25 in FIG. 14, all of which will be explained later.

On the other hand, if the contents have not hit the cache, at a step S20, the Web proxy server 24 to which the request has been distributed transmits the request to the contents server 3 of the request destination. At a step S21, the contents server 3 acquires the contents corresponding to the received request, then transmitting the contents to the client terminal 1. At this time, by way of the Web proxy server 24 to which the request has been distributed, the transmitted contents are temporarily stored into the cache 240 associated therewith.

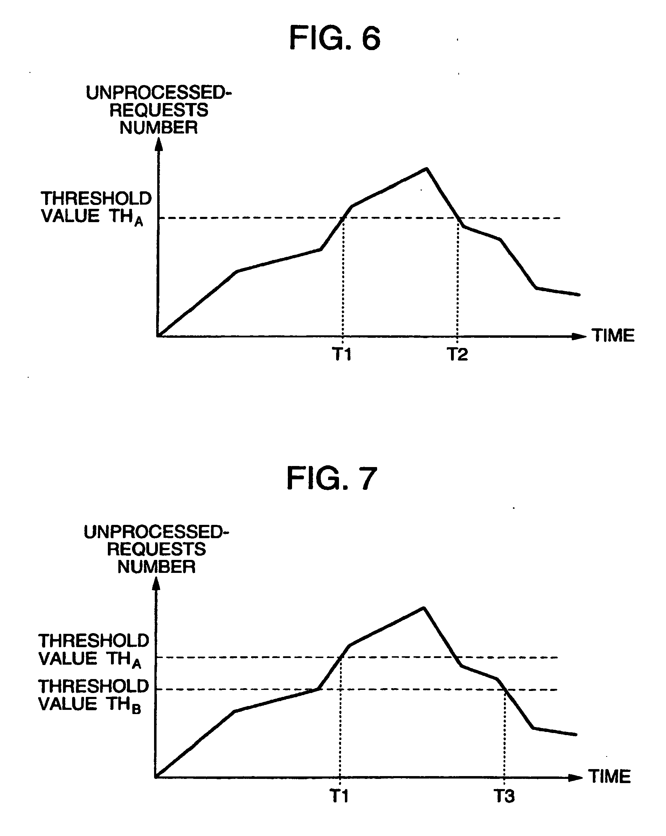

FIG. 6 is a diagram for illustrating a 1st judgement criterion for judging whether or not the unprocessed-requests number at the step S12 has exceeded the threshold value. The longitudinal axis denotes the unprocessed-requests number, and the transverse axis denotes time. The unprocessed-requests number since the starting of the contents requests generally increases with time, and begins to decrease at a point-in-time. The threshold value TH_{A} is a numerical value set in advance, and thus can be modified by the system manager, for example. At a time T1 at which, of the requests from the client terminals 1-1 to 1-i, the unprocessed-requests number has exceeded the threshold value TH_{A}, the load distributing device 22 stops the request transmission to the Web proxy servers 24-1 to 24-n which the device 22 has continued until then, transmitting the requests to the request regulating device 23 instead.

Also, at a time T2 at which the unprocessed-requests number has become smaller than the threshold value TH_{A}, the load distributing device 22 stops the request transmission to the request regulating device 23, transmitting the requests to the Web proxy servers 24-1 to 24-n instead.

FIG. 7 is a diagram for illustrating a 2nd judgement criterion for judging whether or not the unprocessed-requests number at the step S12 has exceeded threshold values. The threshold value TH_{A} and the threshold value TH_{B} are numerical values set in advance, and thus can be modified by the system manager, for example. At the time T1 at which, of the requests from the client terminals 1-1 to 1-i, the unprocessed-requests number has exceeded the threshold value TH_{A}, the load distributing device 22 stops the request transmission to the Web proxy servers 24-1 to 24-n which the device 22 has continued until then, transmitting the requests to the request regulating device 23 instead. At a time T3 at which the unprocessed-requests number has become smaller than the threshold value TH_{B}, the load distributing device 22 stops the request transmission to the request regulating device 23, transmitting the requests to the Web proxy servers 24-1 to 24-n instead. In this way, the setting of the plurality of threshold values, i.e., causing the threshold value to have hysteresis characteristics, makes it possible to stabilize the system.

Namely, in the case where there exists only the one type of threshold value (i.e., FIG. 6), when the unprocessed-requests number goes up and down the threshold value TH_{A}, there arrears a possibility that the destination of the request transmission from the load distributing device 22 is frequently switched between the request regulating device 23 and the Web proxy servers 24-1 to 24-n. The setting of the plurality of threshold values, however, makes it unnecessary to frequently switch the connection between the request regulating device 23 and the Web proxy servers 24-1 to 24-n, thereby allowing the offering of the stabilized system.

As described earlier, the message creation processing unit 45 creates the regulating message content illustrated in FIG. 8A and saying "Because the line is jammed at present, please make the request after a while." FIG. 8B illustrates the description example of the above-described regulating contents. Rewriting the content of <BODY> can modify the message content.

As having been described so far, the congestion controlling system according to the embodiment of the present invention makes it possible to suppress the congestion between the client terminals 1-1 to 1-i and the contents servers 3-1 to 3-j, thereby allowing an effective offering of the contents providing service.

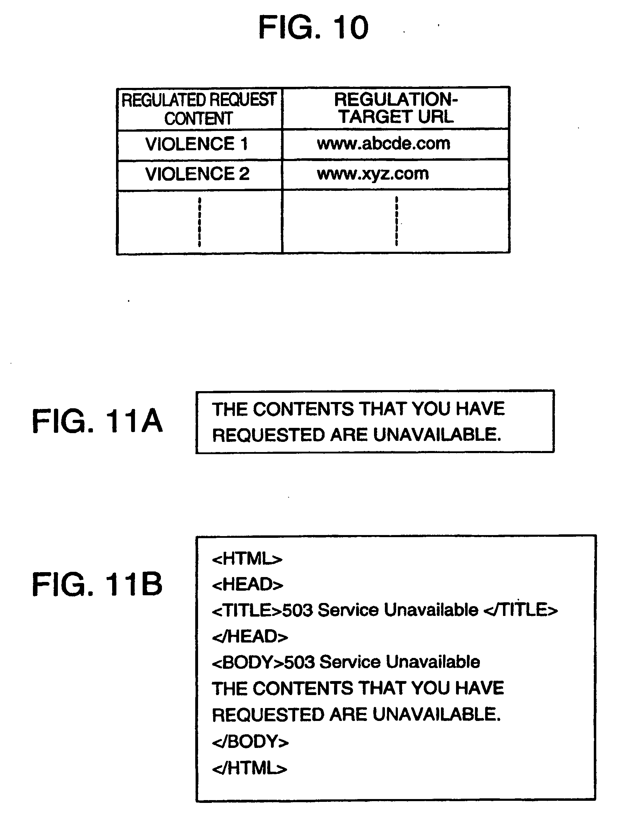

Next, referring to the FIG. 9 and FIG. 10, the explanation will be given below concerning a congestion controlling system according to a 1st modified example of the embodiment of the present invention.

FIG. 9 is a flowchart diagram for showing a congestion control technology according to the 1st modified example of the embodiment of the present invention. In the congestion control technology according to the 1st modified example, a requested URL is defined and employed as the judgement criterion.

The processing at a step S11 is basically the same as the processing at the step S11 illustrated in FIG. 4. Namely, at the step S11, a client terminal 1 transmits a request to the load distributing device 22. At a step S22, the load distributing device 22 checks whether the contents of a URL that the client terminal 1 has requested is of a content that is proper or improper for the transmission.

The judgement as to whether the content is proper or not can be made by, for example, making reference to the storage device 22-4 (FIG. 2A) provided within the load distributing device 22 and storing regulation-targets. Otherwise, the load distributing device 22 can make the judgement by making an inquiry of the browsing regulating device 26 (FIG. 1) provided outside the device 22. The storage device within the load distributing device 22 or a storage device within the browsing regulating device 26 includes a database as illustrated in FIG. 10 where the regulated request content and the regulation-target URLs are caused to correspond to each other. Moreover, the load distributing device 22 or the browsing regulating device 26 has a judgement processing unit for making a comparison between a requested URL and the content in the database corresponding to the URL so as to make a judgement as to whether the transmission of the contents included in the URL is proper or not. In preparation for the case where the browsing regulating device 26 make the judgement, the device 26 includes a communications processing unit for performing the communications processing with the load distributing device 22. Incidentally, the regulation-target URLs illustrated in FIG. 10 are for the mere presentation of examples, and thus there is no intention of indicating an existing specific URL.

At the step S22, if the contents of the requested URL are of the request for a regulation-target URL, the processing goes to the step S13 illustrated in FIG. 4. At the step S13, the load distributing device 22 transmits the request from the client terminal 1 to the request regulating device 23. Hereinafter, basically the same processings as those in FIG. 4 will be performed. Incidentally, in the processings equivalent to those at the steps S14 and S15 in FIG. 4, the request regulating device (server) 23 acquires a regulating message content illustrated in, for example, FIG. 11A and saying "The contents that you have requested are unavailable.", then creating regulating contents as illustrated in FIG. 11B with the use of this regulating message content. This allows the user, who has made the access from the client terminal 1, to know the reason why the user cannot acquire the contents, thereby permitting the user to stop the access rather earlier.

Meanwhile, at the step S22, if the contents of the requested URL are not of the request for the regulation-target URL, as illustrated in FIG. 9, the processing goes to the step S17 (FIG. 4). At the step S17, the load distributing device 22 transmits the request to a Web proxy server 24 to which the request has been distributed. Hereinafter, basically the same processings as those in FIG. 4 will be performed.

Next, referring to the FIG. 12, the explanation will be given below concerning a congestion controlling system according to a 2nd modified example of the embodiment of the present invention.

FIG. 12 is a flowchart diagram for showing a congestion control technology according to the 2nd modified example of the embodiment of the present invention. In the congestion control technology according to the 2nd modified example, the performance of the Web proxy server is defined and employed as the judgement criterion.

The processing at a step S11 is basically the same as the processing at the step S11 in FIG. 4.
Next, at a step S23, the load distributing device 22 or the system managing device 25 judges whether or not the performance (e.g., the presence or absence of the operation, the CPU operation ratio, the vacant situation of the memory, the session number under the connection, and the like) of the Web proxy server 24 to which the request had been distributed has deteriorated more significantly than a threshold value. The presence or absence of the operation means whether or not the server is in an actual operation. The CPU operation ratio means an operation ratio of the processor 32 within the Web proxy server 24. If the operation ratio exceeds, for example, 80%, the performance of the Web proxy server 24 is judged to have deteriorated. The vacant situation of the memory means a vacant situation of the memory related with the processor 32. The session number under the connection corresponds to the unprocessed-requests number.

At the step S23, if it is judged that the performance of the Web proxy server 24 to which the request had been distributed has deteriorated, the processing goes to the step S13 (FIG. 4). At the step S13, the load distributing device 22 transmits the request from the client terminal 1 to the request regulating device 23. Hereinafter, basically the same processings as those in FIG. 4 will be performed.

Meanwhile, at the step S23, if it is judged that the performance of the Web proxy server 24 to which the request had been distributed has not deteriorated, the processing goes to the step S17 (FIG. 4). At the step S17, the load distributing device 22 transmits the request to the Web proxy server 24 to which the request had been distributed. Hereinafter, basically the same processings as those in FIG. 4 will be performed.

Next, referring to the FIG. 13, the explanation will be given below concerning a congestion controlling system according to a 3rd modified example of the embodiment of the present invention.

FIG. 13 is a flowchart diagram for showing a congestion control technology according to the 3rd modified example of the embodiment of the present invention. In the congestion control technology according to the 3rd modified example, the response time of the contents server is defined and employed as the judgement criterion.

FIG. 13 is the flowchart diagram for showing a congestion control method according to the 3rd modified example. The processing at a step S11 is basically the same as the processing at the step S11 in FIG. 4. Next, at a step S24, the load distributing device 22 or the system managing device 25 judges whether or not the response time of the contents server 3 of the request destination has exceeded a threshold value. As the threshold value of the response time, substantially 1 minute is preferable, for example. At the step S24, if it is judged that the response time of the contents server 3 has exceeded the threshold value, at the step S13 (FIG. 4), the load distributing device 22 transmits the request from the client terminal 1 to the request regulating device 23. Hereinafter, basically the same processings as those in FIG. 4 will be performed.

Meanwhile, at the step S24, if it is judged that the response time of the contents server 3 of the request destination has not exceeded the threshold value, the processing goes to the step S17 (FIG. 4). At the step S17, the load distributing device 22 transmits the request to the Web proxy server 24. Hereinafter, basically the same processings as those in FIG. 4 will be performed.

Next, referring to the FIG. 14, the explanation will be given below concerning a congestion controlling system according to a 4th modified example of the embodiment of the present invention.

FIG. 14 is a flowchart diagram for showing a congestion control technology according to the 4th modified example of the embodiment of the present invention. In the congestion control technology according to the 4th modified example, the line utilization ratio is defined and employed as the judgement criterion.

FIG. 14 is the flowchart diagram for showing a congestion control method where the line utilization ratio is defined and employed as the judgement criterion. The processing at a step S11 is basically the same as the processing at the step S11 in FIG. 4. Next, at a step S25, the load distributing device 22 or the system managing device 25 measures a utilization ratio of the communications line (52) between the data relaying device 21 and the contents server 3 of the request destination, thereby judging whether or not the line utilization ratio has exceeded a threshold value TH. If it is judged that the line utilization ratio has exceeded the threshold value TH, e.g., 90%, the processing goes to the step S13 (FIG. 4). At the step S13, the load distributing device 22 transmits the request from the client terminal 1 to the request regulating device 23. Hereinafter, basically the same processings as those in FIG. 4 will be performed. Meanwhile, at the step S25, if it is judged that the line utilization ratio has not exceeded the threshold value TH, the processing goes to the step S17. At the step S17, the load distributing device 22 transmits the request to the Web proxy server 24 to which the request had been distributed. Hereinafter, basically the same processings as those in FIG. 4 will be performed.

As having been explained so far, when performing the request regulation, the conditions at such steps as S12, S22, S23, S24, and S25 can be defined and employed as the judgement criterion for the request regulation. In addition, it is possible to determine the judgement criterion not only by selecting a single condition from these conditions, but by combining some of these conditions arbitrarily.

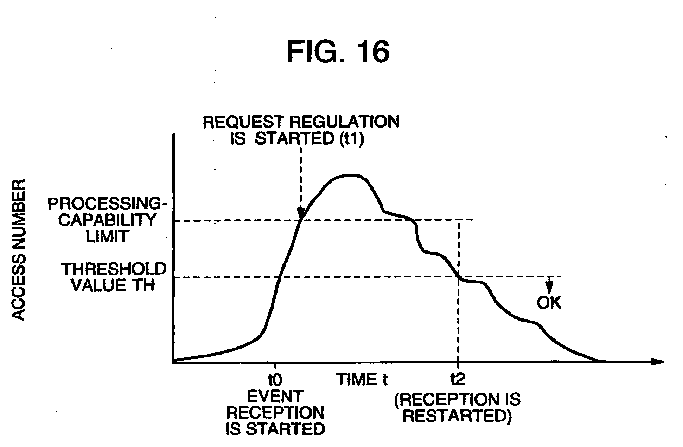

Next, referring to the FIG. 16, the explanation will be given below concerning a statistical information processing for predicting whether or not the request regulation will be able to be removed. FIG. 16 is a diagram for illustrating a time variation example in the access number to an event.

As illustrated in FIG. 16, in the case of the popular event, the access number increases steeply from a reception starting time t₀. At a time, t₁, the accesses exceed the limit of the processing capability. From this time t₁ on, the request regulation is started. In the case of defining the limit of the processing capability to be 100%, a value smaller than 100%, e.g., a value of 80%, is determined as the predetermined threshold value TH of the access number. A time at which the access number has decreased and becomes equal to this threshold value TH is defined to be t₂. At the time t₂, the reception of the accesses is restarted. In this way, performing the request regulation in correspondence with the access number of the requests makes it possible to control the congestion. Incidentally, depending on the time variation in the access number, the threshold value can be changed as required.

Also, a time at which a predetermined time, e.g., 30 minutes or so, has elapsed from the time t₁ may be defined as the reception restarting time t₂.

Incidentally, the request regulation is performed by selecting any one of the conditions at such steps as S12, S22, S23, S24, and S25, or by combining some of the conditions. Based on a statistical information processing function set up in the system managing device 25 or outside the system managing device, if it is predicted that the request regulation will be able to be removed, e.g., 30 minutes after, the request regulating device 23 can transmit, to the client terminal 1 that had transmitted the request, contents saying, for example, "Please make the request again after a lapse of 30 minutes or more." as is illustrated in FIG. 15B.

It should be further understood by those skilled in the art that the foregoing description has been made on embodiments of the invention and that various changes and modifications may be made within the scope of the appended claims.

## Claims

1. A congestion controlling device (2) for connection via communication lines (51, 52) to a plurality of client terminals (1-1 to 1-i) making requests for acquisition of contents and displaying said acquired contents, and to a plurality of contents servers (3-1 to 3-j) holding said contents, said congestion controlling device comprising:
a data relaying device (21) connecable to said communication lines (51, 52) for relaying data containing said requests from said client terminals (1-1 to 1-i) to said contents servers (3-1 to 3-j) and for relaying data containing said contents from said contents servers to said client terminals,
a plurality of web proxy servers (24-1 to 24-n) for caching contents from said contents servers,
a load distributing device (22) connected to said data relaying device (21) and said web proxy servers (24-1 to 24-n) for distributing said requests from said client terminals each to one of said web proxy servers while suppressing excessive load in said data relay processing performed by said data relaying device (21), and
a request regulating device (23) connected to said load distributing device (22) for transmitting a message specified by said load distributing device to said client terminals (1-1 to 1-i),
wherein said load distributing device (22) is adapted for judging whether the number of unprocessed requests received from said client terminals (1-1 to 1-i) by said data relaying device (21) exceeds a predetermined threshold value TH_{A} and distributing a current request from a client to the request regulating device (23) if the threshold is exceeded and to a web proxy server (24-1 to 24-n) if the threshold is not exceeded, return either the requested contents
wherein, the web proxy server, when receiving said current request, is adapted to transmit the requested contents, if it has cached them, to said client terminal having sent said current request, and, said request regulating device, when receiving said current request, is adapted to transmit said message to said client terminal having sent said current request, which message includes access regulating contents for display by said client terminal.

2. The congestion controlling device (2) as claimed in Claim 1, wherein said message is a message according to which said communications lines (51, 52) have been jammed.

3. The congestion controlling device (2) as claimed in Claim 1, wherein said load distributing device (22) is adapted to judge that a request destination of said requests made from said client terminals (1-1 to 1-i) is a predetermined regulation-target destination and then to instruct said request regulating device (23) to transmit a predetermined message according to which information at said request destination is unavailable.

4. The congestion controlling device (2) as claimed in Claim 1, wherein said load distributing device (22) is adapted to judge that a response time of said contents servers (3-1 to 3-j) that are request destinations of said requests from said client terminals (1-1 to 1-i) has exceeded a predetermined threshold value and then to instruct said request regulating device (23) to transmit a predetermined message asking said client terminals (1-1 to 1-i) to make said requests again after a lapse of time.

5. The congestion controlling device (2) as claimed in Claim 1, wherein said load distributing device (22) is adapted to judge that a utilization ratio of said communications lines (51, 52) has exceeded a predetermined threshold value and then to instruct said request regulating device (23) to transmit a predetermined message asking said client terminals (1-1 to 1-i) to make said requests again after a lapse of time.

6. The congestion controlling device (2) as claimed in Claim 1, wherein each of said plurality of Web proxy servers (24-1 to 24-n) includes a cache (240-1 to 240-n) for temporarily storing said contents from said contents servers (3-1 to 3-j), and is adapted to transmit to said client terminals (1-1 to 1-i) said requested contents if stored temporarily in said cache.

7. The congestion controlling device (2) of claim 1, wherein said load distributing device (22) is adapted to perform a distributing control over said requests from said data relaying device (21) so that said requests will not be concentrated on a particular Web proxy server.

8. The congestion controlling device (2) as claimed in Claim 7, wherein said request regulating device (23) is adapted to cause said load distributing device (22) to suppress said request transmission to said contents servers (3-1 to 3-j) or said Web proxy servers (24-1 to 24-n) if a performance of said Web proxy servers (24-1 to 24-n) has deteriorated more significantly than a predetermined performance.

9. The congestion controlling device (2) as claimed in Claim 7, wherein said request regulating device (23) is adapted to cause said load distributing device (22) to suppress said request transmission to said contents servers (3-1 to 3-j) or said Web proxy servers (24-1 to 24-n) if a response time from said contents servers (3-1 to 3-j) has exceeded a predetermined numerical value.

10. The congestion controlling device (2) as claimed in Claim 7, wherein said request regulating device (23) is adapted to cause said load distributing device (22) to suppress said request transmission to said contents servers (3-1 to 3-j) or said Web proxy servers (24-1 to 24-n) if a utilization ratio of a transferring system between said congestion controlling device (2) and said contents servers (3-1 to 3-j) has exceeded a predetermined numerical value.

11. The congestion controlling device (2) as claimed in Claim 7, wherein said request regulating device (23) is adapted to receive said requests to be transmitted to said contents servers (3-1 to 3-j) or said Web proxy servers (24-1 to 24-n) in substitution for said contents servers (3-1 to 3-j) or said Web proxy servers (24-1 to 24-n).

12. The congestion controlling device (2) as claimed in Claim 7, further comprising information notifying means for notifying said client terminals (1-1 to 1-i) of a message to an effect that acceptances of said requests are impossible if said load distributing device (22) does not transmit said requests to said contents servers (3-1 to 3-j) or said Web proxy servers (24-1 to 24-n).

13. The congestion controlling device (2) as claimed in Claim 7, further comprising information notifying means for denying an acceptance of a predetermined request, and for notifying said client terminals (1-1 to 1-i) of a message to an effect that said acceptance of said request is impossible.

14. The congestion controlling device (2) as claimed in Claim 13, further comprising message creating means for editing content of a message to be transmitted to said client terminals (1-1 to 1-i) if acceptances of said requests from said client terminals (1-1 to 1-i) are denied.

15. The congestion controlling device (2) as claimed in Claim 7, further comprising informing means for predicting a point-in-time at which to remove a request regulation in accordance with a time variation in a number of unprocessed requests, and for transmitting, from said request regulating device (23) to said client terminals (1-1 to 1-i), information including said scheduled point-in-time at which to remove said request regulation.

16. A method for controlling congestion in a system (A) including
a plurality of client terminals (1-1 to 1-i) for making requests for acquisition of contents and displaying said acquired contents,
a plurality of contents servers (3-1 to 3-j) holding said contents,
a data relaying device (21) for relaying data containing said requests from said client terminals to said contents servers and for relaying data containing said contents from said contents servers to said client terminals,
a plurality of web proxy servers (24-1 to 24-n) for caching contents from said contents servers, and
a load distributing device (22) connected to said data relaying device (21) and said web proxy servers for distributing said requests from said client terminals each to one of said web proxy servers while suppressing excessive load in said data relay processing performed by said data relaying device (21),
the method comprising the following steps:
(a) judging by said load distributing device (22) whether the number of unprocessed requests received from said client terminals (1-1 to 1-i) by said data relaying device (21) exceeds a predetermined threshold value TH_{A}, and
(b) distributing by said load distributing device (22) a current request from a client to a request regulating device (23) if the threshold is exceeded and to a web proxy server (24-1 to 24-n) if the threshold is not exceeded, and thus returning either the requested contents from the web proxy server or contents server, or a message from said request regulating device (23) to said client terminal having sent said current request, the message from said request regulating device (23) including access regulating contents for display by said client terminal.

17. The congestion controlling method as claimed in Claim 16, wherein,
at said step (a), a performance of said Web proxy servers (24-1 to 24-n) is measured, and,
at said step (b), said request transmission to said contents servers (3-1 to 3-j) or said Web proxy servers (24-1 to 24-n) is suppressed if said performance of said Web proxy servers (24-1 to 24-n) has deteriorated more significantly than a predetermined performance.

18. The congestion controlling method as claimed in Claim 16, wherein,
at said step (a), a response time from said contents servers (3-1 to 3-j) is measured, and,
at said step (b), said request transmission to said contents servers (3-1 to 3-j) or said Web proxy servers (24-1 to 24-n) is suppressed if said response time from said contents servers (3-1 to 3-j) has exceeded a predetermined numerical value.

19. The congestion controlling method as claimed in Claim 16, wherein,
at said step (a), a utilization ratio of a transferring system to said contents servers (3-1 to 3-j) is measured, and,
at said step (b), said request transmission to said contents servers (3-1 to 3-j) or said Web proxy servers (24-1 to 24-n) is suppressed if said utilization ratio of said transferring system has exceeded a predetermined numerical value.

20. A congestion controlling system, comprising:
a plurality of client terminals (1-1 to 1-i) for making requests for acquisition of contents and displaying said contents acquired in response to said requests;
a plurality of contents servers (3-1 to 3-j) for making responses to said requests so as to transmit, to said client terminals (1-1 to 1-i), said contents corresponding to said requests; and
a congestion controlling device (2) according to any of claims 1 to 15 provided between said plurality of client terminals (1-1 to 1-i) and said plurality of contents servers (3-1 to 3-j).

## Patentansprüche

1. Überlastungsbeherrschungsvorrichtung (2) zur Verbindung über Verbindungsleitungen (51, 52) mit mehreren Client-Terminals (1-1 bis 1-i), die Anforderungen zum Erhalt von Inhalten abgeben und die angeforderten Inhalte anzeigen, und mit mehreren Inhalts-Servern (3-1 bis 3-j), die die Inhalte speichern, aufweisend:
eine Datenrelay-Einrichtung (21), die mit den Verbindungsleitungen (51, 52) verbindbar ist, um Daten, die die Anforderungen enthalten, von den Client-Terminals (1-1 bis 1-i) an die Inhalts-Server (3-1 bis 3-j) weiterzuleiten und Daten, die die Inhalte enthalten, von den Inhalts-Servern an die Client-Terminals weiterzuleiten,
mehrere Web-Proxy-Server (24-1 bis 24-n) zum Zwischenspeichern von Inhalten von den Inhalts-Servern,
eine Lastverteilungseinrichtung (22), die mit der Datenrelay-Einrichtung (21) und den Web-Proxy-Servern (24-1 bis 24-n) verbunden ist, um die Anforderungen von den Client-Terminals jeweils an einen der Web-Proxy-Server zu verteilen, während übermäßige Last im Datenweiterleitungsvorgang durch die Datenrelay-Einrichtung (21) vermieden wird, und
eine Anforderungsreguliereinrichtung (23), die mit der Lastverteilungseinrichtung (22) verbunden ist, um eine von dieser angegebene Nachricht an die Client-Terminals (1-1 bis 1-i) zu übertragen,
wobei die Lastverteilungseinrichtung (22) eingerichtet ist zu beurteilen, ob die Anzahl unverarbeiteter Anforderungen, die durch die Datenrelay-Einrichtung (21) von den Client-Terminals (1-1 bis 1-i) her empfangen wurden, einen vorbestimmten Schwellenwert TH_{A} überschreitet, und eine vorliegende Anforderung von einem Client an die Anforderungsreguliereinrichtung (23) zu verteilen, wenn die Schwelle überschritten wird, und an einen Web-Proxy-Server (24-1 bis 24-n) zu verteilen, wenn die Schwelle nicht überschritten wird,
wobei der Web-Proxy-Server dann, wenn er die vorliegende Anforderung empfängt, eingerichtet ist, den angeforderten Inhalt, sofern er ihn zwischengespeichert hat, an das Client-Terminal zu senden, das die vorliegende Anforderung ausgesandt hat, und die Anforderungsreguliereinrichtung dann, wenn sie die vorliegende Anforderung empfängt, eingerichtet ist, die genannte Nachricht an das Client-Terminal zu senden, das die vorliegende Anforderung ausgesandt hat, wobei die Nachricht einen zugriffsregulierenden Inhalt zur Anzeige durch das Client-Terminal enthält.

2. Vorrichtung (2) nach Anspruch 1, wobei die Nachricht eine Nachricht ist, gemäß der die Verbindungsleitungen (51, 52) gestört sind.

3. Vorrichtung (2) nach Anspruch 1, wobei die Lastverteilungseinrichtung (22) eingerichtet ist zu beurteilen, daß ein Anforderungsziel der von den Client-Terminals (1-1 bis 1-i) abgegebenen Anforderungen ein bestimmtes zu regulierendes Ziel ist, und dann die Anforderungsreguliereinrichtung (23) anzuweisen, eine vorbestimmte Nachricht auszusenden, gemäß der Informationen am Anforderungsziel nicht verfügbar sind.

4. Vorrichtung (2) nach Anspruch 1, wobei die Lastverteilungseinrichtung eingerichtet ist zu beurteilen, daß eine Antwortzeit der Inhalts-Server (3-1 bis 3-j), die Anforderungsziele der von den Client-Terminals (1-1 bis 1-i) abgegebenen Anforderungen sind, einen vorbestimmten Schwellenwert übersteigt, und dann die Anforderungsreguliereinrichtung (23) anzuweisen, eine vorbestimmte Nachricht auszusenden, die die Client-Terminals (1-1 bis 1-i) bittet, die Anforderungen nach Ablauf einer Zeit erneut zu abzugeben.

5. Vorrichtung (2) nach Anspruch 1, wobei die Lastverteilungseinrichtung (22) eingerichtet ist zu beurteilen, daß ein Auslastungsverhältnis der Verbindungsleitungen (51, 52) einen vorbestimmten Schwellenwert übersteigt, und dann die Anforderungsreguliereinrichtung (23) anzuweisen, eine vorbestimmte Nachricht auszusenden, die die Client-Terminals (1-1 bis 1-i) bittet, die Anforderungen nach Ablauf einer Zeit erneut zu abzugeben.

6. Vorrichtung (2) nach Anspruch 1, wobei die Web-Proxy-Server (24-1 bis 24-n) jeweils einen Cache (240-1 bis 240-n) zum vorübergehenden Speichern der Inhalte der Inhalts-Server (3-1 bis 3-j) enthalten und eingerichtet sind, dann, wenn die angeforderten Inhalte vorübergehend im Cache gespeichert sind, diese an die Client-Terminals (1-1 bis 1-i) zu senden.

7. Vorrichtung (2) nach Anspruch 1, wobei die Lastverteilungseinrichtung (22) eingerichtet ist, für die Anforderungen von der Datenrelay-Einrichtung (21) eine Verteilungssteuerung auszuführen, so daß die Anforderungen nicht auf bestimmten Web-Proxy-Server konzentriert werden.

8. Vorrichtung (2) nach Anspruch 7, wobei die Anforderungsreguliereinrichtung (23) eingerichtet ist, die Lastverteilungseinrichtung (22) zu veranlassen, das Übertragen einer Anforderung an die Inhalts-Server (3-1 bis 3-j) oder die Web-Proxy-Server (24-1 bis 24-n) zu unterdrücken, wenn die Leistung der Web-Proxy-Server (24-1 bis 24-n) stärker als eine vorbestimmte Leistung nachgelassen hat.

9. Vorrichtung (2) nach Anspruch 7, wobei die Anforderungsreguliereinrichtung (23) eingerichtet ist, die Lastverteilungseinrichtung (22) zu veranlassen, das Übertragen einer Anforderung an die Inhalts-Server (3-1 bis 3-j) oder die Web-Proxy-Server (24-1 bis 24-n) zu unterdrücken, wenn die Antwortzeit von den Inhalts-Servern (3-1 bis 3-j) einen vorbestimmten numerischen Wert übersteigt.

10. Vorrichtung (2) nach Anspruch 7, wobei die Anforderungsreguliereinrichtung (23) eingerichtet ist, die Lastverteilungseinrichtung (22) zu veranlassen, das Übertragen einer Anforderung an die Inhalts-Server (3-1 bis 3-j) oder die Web-Proxy-Server (24-1 bis 24-n) zu unterdrücken, wenn das Auslastungsverhältnis eines Obertragungssystems zwischen der Überlastungsbeherrschungsvorrichtung (2) und den Inhalts-Servern (3-1 bis 3-j) einen vorbestimmten numerischen Wert übersteigt.

11. Vorrichtung (2) nach Anspruch 7, wobei die Anforderungsreguliereinrichtung (23) eingerichtet ist, die an die Inhalts-Server (3-1 bis 3-j) oder die Web-Proxy-Server (24-1 bis 24-n) zu übertragenden Anforderungen anstelle der Inhalts-Server (3-1 bis 3-j) oder der Web-Proxy-Server (24-1 bis 24-n) zu empfangen.

12. Vorrichtung (2) nach Anspruch 7, mit einer Informationsbenachrichtigungseinrichtung zum Benachrichtigen der Client-Terminals (1-1 bis 1-i) mittels einer Nachricht mit der Wirkung, daß die Annahme der Anforderungen unmöglich ist, wenn die Lastverteilungseinrichtung (22) die Anforderungen nicht an die Inhalts-Server (3-1 bis 3-j) oder die Web-Proxy-Server (24-1 bis 24-n) überträgt.

13. Vorrichtung (2) nach Anspruch 7 mit einer Informationsbenachrichtigungseinrichtung zum Ablehnen der Annahme einer vorbestimmten Anforderung und zum Benachrichtigen der Client-Terminals (1-1 bis 1-i) mittels einer Nachricht mit der Wirkung, daß die Annahme der Anforderung unmöglich ist.

14. Vorrichtung (2) nach Anspruch 13 mit einer Nachrichtenerzeugungseinrichtung zum Editieren des Inhalts einer an die Client-Terminals (1-1 bis 1-i) zu sendenden Nachricht, wenn die Annahme der Nachrichten von den Client-Terminals (1-1 bis 1-i) abgelehnt wird.

15. Vorrichtung (2) nach Anspruch 7 mit einer Informationseinrichtung zum Vorhersagen eines Zeitpunkts, zu dem eine Anforderungsregulierung aufgehoben wird, entsprechend einer zeitlichen Änderung in der Anzahl unverarbeiteter Anforderungen, und zum Übermitteln von Informationen einschließlich des geplanten Zeitpunkts, zu dem die Anforderungsregulierung aufgehoben wird, von der Anforderungsreguliereinrichtung (23) an die Client-Terminals (1-1 bis 1-i).

16. Verfahren zum Beherrschen einer Überlastung in einem System (A) mit
mehreren Client-Terminals (1-1 bis 1-i) zum Abgeben von Anforderungen für die Gewinnung von Inhalten und zum Anzeigen der gewonnenen Inhalte,
mehreren Inhalts-Servern (3-1 bis 3-j), die die Inhalte speichern,
einer Datenrelay-Einrichtung (21) zum Weiterleiten von Daten, die die Anforderungen enthalten, von den Client-Terminals an die Inhalts-Server und zum Weiterleiten von Daten, die die Inhalte enthalten, von den Inhalts-Servern an die Client-Terminals,
mehreren Web-Proxy-Servern (24-1 bis 24-n) zum Zwischenspeichern von Inhalten von den Inhalts-Servern und
einer Lastverteilungseinrichtung (22), die mit der Datenrelay-Einrichtung (21) und den Web-Proxy-Servern verbunden ist, um die Anforderungen von den Client-Terminals jeweils an einen der Web-Proxy-Server zu verteilen, während eine übermäßige Last im Datenweiterleitungsvorgang durch die Datenrelay-Einrichtung (21) vermieden wird,
mit folgenden Schritten:
a) Beurteilen durch die Lastverteilungseinrichtung (22), ob die Anzahl unverarbeiteter Anforderungen, die durch die Datenrelay-Einrichtung (21) von den Client-Terminals (1-1 bis 1-i) her empfangen wurden, einen vorbestimmten Schwellenwert TH_{A} überschreitet, und
b) Verteilen einer vorliegenden Anforderung von einem Client durch die Lastverteilungseinrichtung (22) an eine Anforderungsreguliereinrichtung (23), wenn die Schwelle überschritten wird, und an einen Web-Proxy-Server (24-1 bis 24-n), wenn die Schwelle nicht überschritten wird, und somit Zurückgeben entweder des angeforderten Inhalts vom Web-Proxy-Server oder Inhalts-Server oder einer Nachricht von der Anforderungsreguliereinrichtung (23) an das Client-Terminal, das die vorliegende Anforderung ausgesandt hat, wobei die Nachricht von der Anforderungsreguliereinrichtung (23) einen zugriffsregulierenden Inhalt zur Anzeige durch das Client-Terminal enthält.

17. Verfahren nach Anspruch 16, wobei
im Schritt (a) die Leistung der Web-Proxy-Server (24-1 bis 24-n) gemessen wird und
im Schritt (b) die Übertragung von Anforderungen an die Inhalts-Server (3-1 bis 3-j) oder Web-Proxy-Server (24-1 bis 24-n) unterdrückt wird, wenn die Leistung der Web-Proxy-Server (24-1 bis 24-n) stärker als eine vorbestimmte Leistung nachgelassen hat.

18. Verfahren nach Anspruch 16, wobei
im Schritt (a) die Antwortzeit der Inhalts-Server (3-1 bis 3-j) gemessen wird und
im Schritt (b) die Übertragung der Anforderungen an die Inhalts-Server (3-1 bis 3-j) oder Web-Proxy-Server (24-1 bis 24-n) unterdrückt wird, wenn die Antwortzeit von den Inhalts-Servern (3-1 bis 3-j) einen vorbestimmten numerischen Wert übersteigt.

19. Verfahren nach Anspruch 16, wobei
im Schritt (b) die Übertragung von Anforderungen an die Inhalts-Server (3-1 bis 3-j) oder Web-Proxy-Server (24-1 bis 24-n) unterdrückt wird, wenn das Auslastungsverhältnis des Übertragungssystems einen vorbestimmten numerischen Wert übersteigt.

20. Überlästungsbeherrschungssystem, aufweisend:
mehrere Client-Terminals (1-1 bis 1-i) zum Abgeben von Anforderungen zur Gewinnung von Inhalten und zur Anzeige von Inhalten, die in Antwort auf die Anforderungen gewonnen wurden,
mehrere Inhalts-Server (3-1 bis 3-j) zur Abgabe von Antworten auf die Anforderungen, um die den Anforderungen entsprechenden Inhalte an die Client-Terminals (1-1 bis 1-i) zu übertragen, und
eine Überlastungsbeherrschungsvorrichtung (2) nach einem der Ansprüche 1 bis 15, die zwischen den Client-Terminals (1-1 bis 1-i) und den Inhalts-Servern (3-1 bis 3-j) vorgesehen ist.

## Revendications

1. Dispositif de contrôle d'encombrement (2) destiné à être connecté via des lignes de communication (51, 52) à une pluralité de terminaux clients (1-1 à 1-i) effectuant des demandes d'acquisition de contenus et affichant lesdits contenus acquis, et à une pluralité de serveurs de contenus (3-1 à 3-j) conservant lesdits contenus, ledit dispositif de contrôle d'encombrement comportant :
un dispositif de relais de données (21) pouvant être connecté auxdites lignes de communication (51, 52) pour relayer des données contenant lesdites demandes à partir desdits terminaux clients (1-1 à 1-i) auxdits serveurs de contenus (3-1 à 3-j) et pour relayer des données contenant lesdits contenus à partir desdits serveurs de contenus auxdits terminaux clients,
une pluralité de serveurs mandataires Web (24-1 à 24-n) pour mettre en cache des contenus provenant desdits serveurs de contenus,
un dispositif de distribution de charge (22) connecté audit dispositif de relais de données (21) et auxdits serveurs mandataires Web (24-1 à 24-n) pour distribuer lesdites demandes desdits terminaux clients chacune à l'un desdits serveurs mandataires Web tout en atténuant la charge excessive dans ledit traitement de relais de données exécuté par ledit dispositif de relais de données (21), et
un dispositif de régulation de demandes (23) connecté audit dispositif de distribution de charge (22) pour transmettre un message spécifié par ledit dispositif de distribution de charge auxdits terminaux clients (1-1 à 1-i),
dans lequel ledit dispositif de distribution de charge (22) est adapté pour déterminer si le nombre de demandes non-traitées reçues depuis lesdits terminaux clients (1-1 à 1-i) par ledit dispositif de relais de données (21) dépasse une valeur de seuil prédéterminée, TH_{A}, et distribuer une demande courante provenant d'un client au dispositif de régulation de demandes (23) si le seuil est dépassé et à un serveur mandataire Web (24-1 à 24-n) si le seuil n'est pas dépassé, retourner le contenu demandé,
dans lequel le serveur mandataire Web, lorsqu'il reçoit ladite demande courante, est adapté pour transmettre les contenus demandés, s'il les a mis en cache, audit terminal client ayant envoyé ladite demande courante, et, ledit dispositif de régulation de demandes, lorsqu'il reçoit ladite demande courante, est adapté pour transmettre ledit message audit terminal client ayant envoyé ladite demande courante, lequel message inclut un contenu de régulation d'accès à afficher par ledit terminal client.

2. Dispositif de contrôle d'encombrement (2) selon la revendication 1, dans lequel ledit message est un message conformément auquel lesdites lignes de communication (51, 52) ont été brouillées.

3. Dispositif de contrôle d'encombrement (2) selon la revendication 1, dans lequel ledit dispositif de distribution de charge (22) est adapté pour déterminer qu'une destination de demande desdites demandes effectuées par lesdits terminaux clients (1-1 à 1-i) est une destination cible de régulation prédéterminée et pour ensuite ordonner audit dispositif de régulation de demandes (23) de transmettre un message prédéterminé conformément auquel des informations à ladite destination de demande sont indisponibles.

4. Dispositif de contrôle d'encombrement (2) selon la revendication 1, dans lequel ledit dispositif de distribution de charge (22) est adapté pour déterminer qu'un temps de réponse desdits serveurs de contenus (3-1 à 3-j) qui sont des destinations de demande desdites demandes desdits terminaux clients (1-1 à 1-i) a dépassé une valeur de seuil prédéterminée et pour ordonner ensuite audit dispositif de régulation de demandes (23) de transmettre un message prédéterminé demandant auxdits terminaux clients (1-1 à 1-i) de réaliser à nouveau lesdites demandes après un laps de temps.

5. Dispositif de contrôle d'encombrement (2) selon la revendication 1, dans lequel ledit dispositif de distribution de charge (22) est adapté pour déterminer qu'un rapport d'utilisation desdites lignes de communication (51, 52) a dépassé une valeur de seuil prédéterminée et pour ordonner ensuite audit dispositif de régulation de demandes (23) de transmettre un message prédéterminé demandant auxdits terminaux clients (1-1 à 1-i) de réaliser à nouveau lesdites demandes après un laps de temps.

6. Dispositif de contrôle d'encombrement (2) selon la revendication 1, dans lequel chacun de ladite pluralités de serveurs mandataires Web (24-1 à 24-n) inclut un cache (240-1 à 240-n) pour temporairement mémoriser lesdits contenus provenant desdits serveurs de contenus (3-1 à 3-j), et est adapté pour transmettre auxdits terminaux clients (1-1 à 1-i) lesdits contenus demandés s'ils sont mémorisés temporairement dans ledit cache.

7. Dispositif de contrôle d'encombrement (2) selon la revendication 1, dans lequel ledit dispositif de distribution de charge (22) est adapté pour effectuer une commande de distribution sur lesdites demandes dudit dispositif de relais de données (21) de sorte que lesdites demandes ne seront pas concentrées sur un serveur mandataire Web particulier.

8. Dispositif de contrôle d'encombrement (2) selon la revendication 7, dans lequel ledit dispositif de régulation de demandes (23) est adapté pour amener ledit dispositif de distribution de charge (22) à supprimer ladite transmission de demande auxdits serveurs de contenus (3-1 à 3-j) ou auxdits serveurs mandataires Web (24-1 à 24-n) si une performance desdits serveurs mandataires Web (24-1 à 24-n) s'est détériorée de manière plus significative qu'une performance prédéterminée.

9. Dispositif de contrôle d'encombrement (2) selon la revendication 7, dans lequel ledit dispositif de régulation de demandes (23) est adapté pour amener ledit dispositif de distribution de charge (22) à supprimer ladite transmission de demande auxdits serveurs de contenus (3-1 à 3-j) ou auxdits serveurs mandataires Web (24-1 à 24-n) si un temps de réponse desdits serveurs de contenus (3-1 à 3-j) a dépassé une valeur numérique prédéterminée.

10. Dispositif de contrôle d'encombrement (2) selon la revendication 7, dans lequel ledit dispositif de régulation de demandes (23) est adapté pour amener ledit dispositif de distribution de charge (22) à supprimer ladite transmission de demande auxdits serveurs de contenus (3-1 à 3-j) ou auxdits serveurs mandataires Web (24-1 à 24-n) si un rapport d'utilisation d'un système de transfert entre ledit dispositif de contrôle d'encombrement (2) et lesdits serveurs de contenus (3-1 à 3-j) a dépassé une valeur numérique prédéterminée.

11. Dispositif de contrôle d'encombrement (2) selon la revendication 7, dans lequel ledit dispositif de régulation de demandes (23) est adapté pour recevoir lesdites demandes à transmettre auxdits serveurs de contenus (3-1 à 3-j) ou auxdits serveurs mandataires Web (24-1 à 24-n) en remplacement desdits serveurs de contenus (3-1 à 3-j) ou desdits serveurs mandataires Web (24-1 à 24-n).

12. Dispositif de contrôle d'encombrement (2) selon la revendication 7, comportant de plus des moyens de notification d'informations pour notifier auxdits terminaux clients (1-1 à 1-i) un message pour indiquer que des acceptations desdites demandes sont impossibles si ledit dispositif de distribution de charge (22) ne transmet pas lesdites demandes auxdits serveurs de contenus (3-1 à 3-j) ou auxdits serveurs mandataires Web (24-1 à 24-n).

13. Dispositif de contrôle d'encombrement (2) selon la revendication 7, comportant de plus des moyens de notification d'informations pour refuser une acceptation d'une demande prédéterminée, et pour notifier auxdits terminaux clients (1-1 à 1-i) un message indiquant que ladite acceptation de ladite demande est impossible.

14. Dispositif de contrôle d'encombrement (2) selon la revendication 13, comportant de plus des moyens de création de message pour éditer un contenu d'un message à transmettre auxdits terminaux clients (1-1 à 1-i) si des acceptations desdites demandes provenant desdits terminaux clients (1-1 à 1-i) sont refusées.

15. Dispositif de contrôle d'encombrement (2) selon la revendication 7, comportant de plus des moyens d'informations pour prédire un moment auquel a lieu une suppression d'une régulation de demandes conformément à une variation dans le temps d'un nombre de demandes non-traitées, et pour transmettre, à partir dudit dispositif de régulation de demandes (23) auxdits terminaux clients (1-1 à 1-i), des informations incluant ledit moment planifié auquel a lieu une suppression de ladite régulation de demandes.

16. Procédé pour contrôler l'encombrement dans un système (A) incluant
une pluralité de terminaux clients (1-1 à 1-i) pour effectuer des demandes d'acquisition de contenus et afficher lesdits contenus acquis,
une pluralité de serveurs de contenus (3-1 à 3-j) conservant lesdits contenus,
un dispositif de relais de données (21) pour relayer des données contenant lesdites demandes à partir desdits terminaux clients vers lesdits serveurs de contenus et pour relayer des données contenant lesdits contenus à partir desdits serveurs de contenus vers lesdits terminaux clients,
une pluralité de serveurs mandataires Web (24-1 à 24-n) pour mettre en cache des contenus provenant desdits serveurs de contenus, et
un dispositif de distribution de charge (22) connecté audit dispositif de relais de données (21) et auxdits serveurs mandataires Web pour distribuer lesdites demandes provenant desdits terminaux clients chacune à l'un desdits serveurs mandataires Web tout en atténuant la charge excessive dans ledit traitement de relais de données exécuté par ledit dispositif de relais de données (21),
le procédé comportant les étapes suivantes consistant à :
(a) déterminer par ledit dispositif de distribution de charge (22) si le nombre de demandes non-traitées reçues depuis lesdits terminaux clients (1-1 à 1-i) par ledit dispositif de relais de données (21) dépasse une valeur de seuil prédéterminée, TH_{A}, et
(b) distribuer par ledit dispositif de distribution de charge (22) une demande courante provenant d'un client à un dispositif de régulation de demandes (23) si le seuil est dépassé et à un serveur mandataire Web (24-1 à 24-n) si le seuil n'est pas dépassé, et par conséquent retourner le contenu demandé depuis le serveur mandataire Web ou le serveur de contenus, ou un message depuis ledit dispositif de régulation de demandes (23) audit terminal client ayant envoyé ladite demande courante, le message dudit dispositif de régulation de demandes (23) incluant un contenu de régulation d'accès destiné à être affiché par ledit terminal client.

17. Procédé de contrôle d'encombrement selon la revendication 16, dans lequel,
à ladite étape (a), une performance desdits serveurs mandataires Web (24-1 à 24-n) est mesurée, et
à ladite étape (b), ladite transmission de demande auxdits serveurs de contenus (3-1 à 3-j) ou auxdits serveurs mandataires Web (24-1 à 24-n) est supprimée si ladite performance desdits serveurs mandataires Web (24-1 à 24-n) s'est détériorée de manière plus significative qu'une performance prédéterminée.

18. Procédé de contrôle d'encombrement selon la revendication 16, dans lequel
à ladite étape (a), un temps de réponse desdits serveurs de contenus (3-1 à 3-j) est mesuré, et
à ladite étape (b), ladite transmission de demande auxdits serveurs de contenus (3-1 à 3-j) ou auxdits serveurs mandataires Web (24-1 à 24-n) est supprimée si ledit temps de réponse desdits serveurs de contenus (3-1 à 3-j) a dépassé une valeur numérique prédéterminée.

19. Procédé de contrôle d'encombrement selon la revendication 16, dans lequel
à ladite étape (a), un rapport d'utilisation d'un système de transfert vers lesdits serveurs de contenus (3-1 à 3-j) est mesuré, et
à ladite étape (b), ladite transmission de demande auxdits serveurs de contenus (3-1 à 3-j) ou auxdits serveurs mandataires Web (24-1 à 24-n) est supprimée si ledit rapport d'utilisation dudit système de transfert a dépassé une valeur numérique prédéterminée.

20. Système de contrôle d'encombrement, comportant :
une pluralité de terminaux clients (1-1 à 1-i) pour effectuer des demandes d'acquisition de contenus et afficher lesdits contenus acquis en réponse auxdites demandes,
une pluralité de serveurs de contenus (3-1 à 3-j) pour effectuer des réponses auxdites demandes de manière à transmettre, auxdits terminaux clients (1-1 à 1-i), lesdits contenus correspondant auxdites demandes, et
un dispositif de contrôle d'encombrement selon l'une quelconque des revendications 1 à 15 fourni entre ladite pluralité de terminaux clients (1-1 à 1-i) et ladite pluralité de serveurs de contenus (3-1 à 3-j).
